# EUROPEAN PATENT SPECIFICATION

(11) **EP 0 847 480 B1**
(45) Date of publication and mention of the grant of the patent: **13.10.1999**
(21) Application number: 96928554.3
(22) Date of filing: 23.08.1996
(51) Int. Cl.: E21D 21/00, F16B 43/02

(54) **ROCKBOLT NUT ASSEMBLIES**
MUTTER FÜR GEBIRGSANKERANORDNUNG
SYSTEME D'ECROU ET DE BOULON D'ANCRAGE

(30) Priority: 30.08.1995 GB 9517660
(43) Date of publication of application: 17.06.1998
(73) Proprietor: Carrington Weldgrip Limited, Barugh, Barnsley, South Yorkshire S75 1HT (GB)
(72) Inventor: GLOVER, Frank, Barnsley South Yorkshire S75 2JP (GB); SCOTT, Christopher, Barnsley South Yorkshire S75 5AH (GB)
(74) Representative: Hitchcock, Esmond Antony
(86) International application number: GB9602066
(87) International publication number: WO9708430

(56) References cited:
- WO-A-95/33917
- DE-A- 4 400 644
- DE-C- 3 641 951
- DE-U- 7 026 503
- FR-A- 1 158 055
- FR-A- 1 209 949
- FR-A- 1 403 030
- GB-A- 2 041 139
- US-A- 3 693 359

## Description

This invention relates to rockbolts and more particularly, to assemblies adapted to enhance the securement of rockbolts in and against a substrate. Such assemblies serve to place the ground or substrate under compressive stress, giving it the greatest stability, and reducing the likelihood of collapse. This is particularly valuable in underground environments such as mines.

A rockbolt is typically secured in a substrate by firstly drilling a hole in the substrate for receiving the bolt. A quantity of resin or cement is then inserted into the hole, after which the bolt is installed. Instalment of the bolt displaces the resin, and the aim is normally to have the hole substantially filled with resin and rod; i.e. to the exclusion of air, when the bolt is fully in place. When the resin or cement cures, the rockbolt is effectively bonded to the substrate. Establishing that the resin or cement has been cured can be accomplished by rotating the rockbolt in the hole until such rotation is effectively prevented.

In order to place under compression the volume of substrate in which the rockbolt is installed, it is normal to fit over the exposed end of a secured rockbolt a spreader plate which engages the substrate around the bolt. A nut is then installed on the threaded rockbolt end, and turned to clamp the spreader plate against the substrate. The clamping force is of course entirely dependent upon the bond established by the resin or cement between the installed length of rockbolt and the surrounding substrate. Once secured in this manner, the exposed end of the rockbolt can be used for the fitment or mounting of other elements.

It is recognised that the ground or substrate in which rockbolts are commonly installed is subject to significant movement, to some extent because of adjacent workings or activity. For whatever reason however, there is a possibility that a nut tightened on the exposed end of rockbolt can become loose. Self-locking mechanisms on rockbolt nuts have been used, but these have not always been successful, and can be expensive.

The present invention is directed at an expedient means by which a nut may be secured on a rockbolt installed in the substrate, to support the substrate directly or indirectly via a spreader plate. Particularly, it concerns a rockbolt assembly comprising a bolt for securement in a substrate with an end length projecting therefrom, which end length is formed with a screw thread. A nut and sleeve combination is adapted to fit over the rockbolt end length to be tightened against the substrate. Such a rockbolt assembly is known for example from FR-A-1,209,949. According to the present invention, the nut has a tapering end section adapted to be received in a section of the sleeve having a complementary internal profile. In use, tightening of the nut on the rockbolt end length against the sleeve and substrate, with the tapering section of the nut in complementary engagement with the internal profile of the sleeve, generates radial forces between the sleeve and nut which urge the tapering section of the nut into clamping engagement with the rockbolt end length. Once the nut has been tightened, there is of course also considerable pressure between the complementary profiles of the nut tapering end section and the sleeve, impeding separation thereof. If desired, one or both of the engaging surfaces of the sleeve and nut can be lined with a friction material.

In preferred embodiments of the invention, a spreader plate is provided for fitting over the end length of the rockbolt and engaging the surface of the substrate around the rockbolt. In use, tightening of the nut holds the spreader plate in place against the substrate. Without a spreader plate, the sleeve would be adapted to present an abutment face for direct engagement with the surface of the substrate around the rockbolt. Of course, in this context the substrate can be provided with loading plates having the effect of spreader plates, but not fitted over the rockbolts.

When spreader plates fitted over the rockbolts are used, the external profile of the sleeve and the surface of the spreader plate making contact therewith can be made complementary. This ensures a predictable location of the spreader plate relative to the rockbolt, facilitating arrangement of rockbolts in and on the substrate, and other features in a respective site. Typically, the matching profiles are spherical or torroidal.

In some circumstances, it can be desirable to restrict the axial length of the internal screw thread on the nut to be less than the axial length of the nut itself. The portion of internal surface of the nut which is void of screw thread is preferably located within the tapering section, and is normally at the narrow end of the tapering end section. The provision of such a portion void of screw thread can enhance the clamping effect generated by the engagement of the complementary profiles of the nut and sleeve.

The invention will now be described by way of example and with reference to the accompanying schematic drawings wherein:
Figure 1 is a cross-sectional elevation illustrating the installation of a rockbolt assembly according to the invention in the substrate;
Figures 2 and 3 illustrate the engagement of a nut and sleeve in another embodiment of the invention; and
Figures 4 and 5 illustrate the engagement of a nut and sleeve in yet another embodiment of the invention.

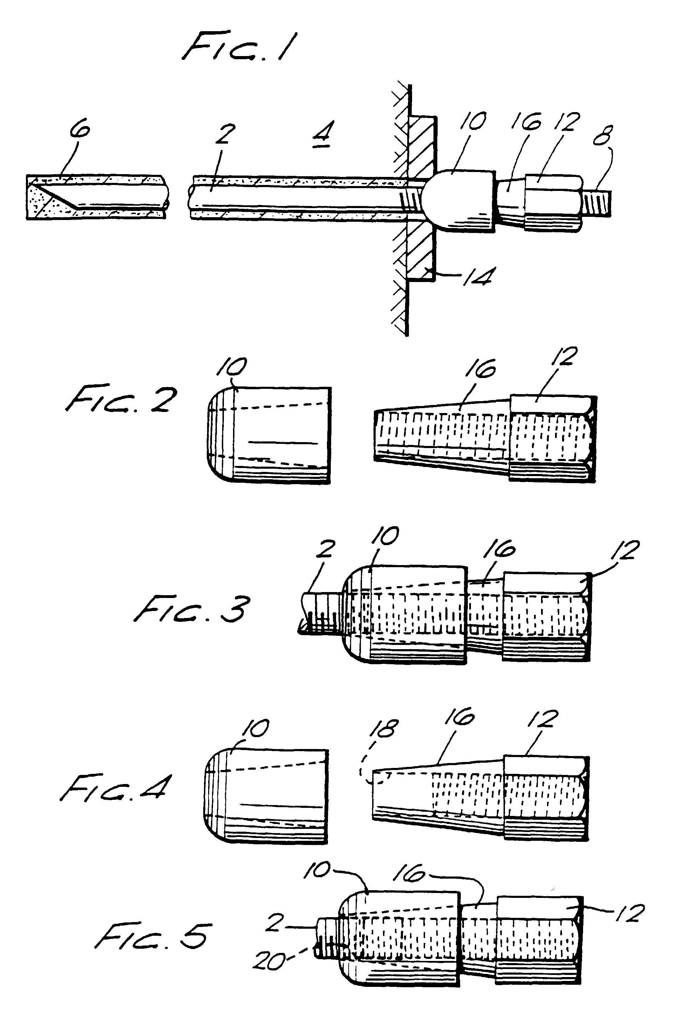

In the embodiment of Figure 1, a rockbolt 2 is shown installed in a hole in a substrate 4. The hole is filled with resin 6 which forms a bond between the surrounding substrate 4 and rockbolt 2, and substantially excludes air from the hole. In mining environments where rockbolts are commonly used, the substrate is coal or rock, or in some circumstances concrete, and the rockbolt will preferably be formed of a synthetic, and non-flammable material such as fibreglass. There is a wide range of resins, cf which epoxy is one, which can be used to provide a secure bond between such rods and such substrates.

The exposed end length 8 of the rockbolt is formed with an external screw thread, to which is fitted a sleeve 10 and a nut 12 which are described in more detail below. They are used to hold a spreader plate 14 against the substrate as the nut is tightened on the bolt. As shown in Figure 1, the end of the sleeve 10 facing the substrate 4 and in contact with the spreader plate 14 as a substantially spherical profile, and the spreader plate around the rockbolt can be provided with a complementary profile to predictably locate the spreader plate relative to the rockbolt as the nut 12 is tightened. As can be seen, the nut has a tapering end section 16 which engages a complementary opening in the sleeve 10. As a consequence, as the nut 12 is tightened against the sleeve which is itself held by the spreader plate, the end section 16 is forced inward, and into clamping engagement with the projecting rockbolt end. This effect will be better apparent from the description which follows of the alternative embodiments of the invention illustrated in Figures 2 to 5.

In underground environments, the substrates in which rockbolt assemblies according to the invention would be installed are commonly subject to expansion. Thus, the rockbolts used must be securely installed and adapted to resist or at least tolerate the tensile forces applied to the bolt as a consequence of such expanding ground. The spreader plates are of course of considerable importance in this context.

In the nut and sleeve combination shown in Figures 2 and 3, the distal end profile of the sleeve is substantially torroidal. The internal surface of the sleeve is tapered to substantially the same extent as is the tapering section 16 of the nut 12. As can be seen, in this embodiment the internal screw thread on the nut extends its full length, including the entirety of the tapering section 16. Figure 3 shows the nut and sleeve in full engagement, and it will be appreciated that the further bringing together of the nut and sleeve must result in the tapering section of the nut being squeezed or clamped into tight engagement with the end length of the bolt 2. To enhance the clamping effect, the taper on the internal profile of the sleeve may be less than that on the section 16 of the nut.

The embodiment of Figures 4 and 5 is substantially similar to that of Figures 2 and 3 but that the actual length of the internal screw thread in the nut 12 is restricted to less than the axial length of the nut itself. A portion 18 of the internal surface of the nut adjacent the narrow end of the tapering section 16 is left void of thread, and disposed directly over the external thread of the bolt 2. We have found that the resultant clamping effect as the nut and sleeve are brought together, as shown in Figure 5, can be greater than the effect where the internal screw thread extends the full length of the nut 12. Additionally, the provision of an end portion in the tapering section of the nut which is void of screw thread does of course also enable that portion to project over an axial length 20 of a bolt which has itself not been cut with an external thread.

When a rockbolt assembly according to the invention is installed in a substrate, the nut and sleeve combination is run down the exposed end of the rockbolt until it is fully engaged against the substrate or spreader plate with the tapering end section of the nut tightly engaged with the complementary profile of the sleeve. As the ground or substrate expands after such installation, it presses the sleeve into even closer engagement with the tapering section of the nut. The inter-engagement of the nut and sleeve results in such expansion enhancing the clamping effect, thus increasing the pressure with which the tapering section of the nut engages the external surface of the rockbolt. This locking on effect is of great assistance in that it tightened the rockbolt assembly but without jeopardising the overall structure. If the structure is to fail, then it should now do so by virtue of a predictable and to some extent controllable failure of the nut assembly, not the rockbolt.

## Claims

1. A rockbolt assembly comprising a rock bolt (2) for securement in a substrate (4) with an end length (8) projecting therefrom, which end length is formed with a screw thread; a nut (12) with an internal screw thread complementary to that on the rockbolt end length and a sleeve (10) for mounting on the rockbolt end length (8), characterised in that said nut has a tapering end section (16); the sleeve (10) having an internal profile complementary to and for receiving the tapering end section (16) of the nut (12), whereby tightening of the nut on the rockbolt end length against the sleeve and substrate with the tapering section of the nut in complementary engagement with the internal profile of the sleeve generates radial forces between the sleeve (10) and nut (12) urging the tapering section (16) of the nut into clamping engagement with the rockbolt end length (8).

2. An assembly according to Claim 1 including a spreader plate (14) for fitting over the end length (8) and engaging the surface of a substrate around the rockbolt; whereby said tightening of the nut (12) holds the spreader plate in place against the substrate.

3. An assembly according to Claim 2 wherein the external profiles of the sleeve (10) and the surface of the spreader plate (14) are complementary in the regions thereof adapted to make contact.

4. An assembly according to Claim 3 wherein the external profile of the sleeve (10) in the respective said region is spherical.

5. An assembly according to Claim 3 wherein the external profile of the sleeve (10) in the respective said region is torroidal.

6. An assembly according to Claim 1 wherein the sleeve (10) is formed with an abutment face for engagement with the surface of the substrate around the rockbolt.

7. An assembly according to any preceding Claim wherein the axial length of the internal screw thread on the nut (12) is less than the axial length of the nut (12).

8. An assembly according to Claim 7 wherein the internal screw thread on the nut (12) extends into only part of the tapering end section (16).

9. An assembly according to Claim 7 or Claim 8 wherein the portion of internal surface of the nut (12) which is void of screw thread is lined with a friction material.

10. An assembly according to any preceding Claim wherein at least one of the complementary engaging surfaces of the sleeve (10) and nut (12) are lined with a friction material.

11. An assembly according to any preceding Claim wherein the taper on the internal profile of the sleeve (10) is less than that on the end section of the nut (12).

## Patentansprüche

1. Deckenankerbaugruppe, umfassend einen Deckenanker (2) zur Befestigung in einem Substrat (4) mit einem davon vorstehenden Endstück (8), wobei das Endstück mit einem Schraubgewinde ausgebildet ist; eine Mutter (12) mit einem Innenschraubgewinde, das zu dem am Deckenanker-Endstück komplementär ist; und eine Hülse (10) für die Montage am Deckenanker-Endstück (8), dadurch gekennzeichnet, daß die Mutter einen sich verjüngenden Endabschnitt (16) aufweist, wobei die Hülse (10) ein Innenprofil aufweist, das komplementär zu dem sich verjüngenden Endabschnitt (16) der Mutter (12) ist und diesen aufnimmt, so daß durch das Festziehen der Mutter am Deckenanker-Endstück gegen die Hülse und das Substrat mit dem sich verjüngenden Abschnitt der Mutter in komplementärem Eingriff mit dem Innenprofil der Hülse Radialkräfte zwischen der Hülse (10) und der Mutter (12) entstehen, die den sich verjüngenden Abschnitt (16) der Mutter in Klemmeingriff mit dem Deckenanker-Endabschnitt (8) drängen.

2. Baugruppe nach Anspruch 1, mit einer Spreizplatte (14) zur Befestigung über dem Endstück (8), die an der Oberfläche eines Substrats um den Deckenanker angreift, so daß durch das genannte Festziehen der Mutter (12) die Spreizplatte gegen das Substrat festgehalten wird.

3. Baugruppe nach Anspruch 2, bei der die Außenprofile der Hülse (10) und die Oberfläche der Spreizplatte (14) in ihren Kontaktbereichen komplementär ausgestaltet sind.

4. Baugruppe nach Anspruch 3, bei der das Außenprofil der Hülse (10) im jeweiligen genannten Bereich sphärisch ist.

5. Baugruppe nach Anspruch 3, bei der das Außenprofil der Hülse (10) im jeweiligen genannten Bereich toroidal ist.

6. Baugruppe nach Anspruch 1, bei der die Hülse (10) mit einer Widerlagerfläche für den Angriff an die Oberfläche des Substrats um den Deckenanker ausgestaltet ist.

7. Baugruppe nach einem der vorherigen Ansprüche, bei der die axiale Länge des Innenschraubgewindes an der Mutter (12) kleiner ist als die axiale Länge der Mutter (12).

8. Baugruppe nach Anspruch 7, bei der sich das Innenschraubgewinde an der Mutter (12) nur in einen Teil des sich verjüngenden Endabschnittes (16) erstreckt.

9. Baugruppe nach Anspruch 7 oder Anspruch 8, bei der der Teil der Innenfläche der Mutter (12), der kein Schraubgewinde hat, mit einem Friktionsmaterial ausgekleidet ist.

10. Baugruppe nach einem der vorherigen Ansprüche, bei der wenigstens eine der komplementären Angriffsflächen der Hülse (10) und der Mutter (12) mit einem Friktionsmaterial ausgekleidet sind.

11. Baugruppe nach einem der vorherigen Ansprüche, bei der die Konizität am Innenprofil der Hülse (10) kleiner ist als die am Endabschnitt der Mutter (12).

## Revendications

1. Un ensemble à tirant d'ancrage englobant un tirant d'ancrage (2) pour la fixation dans un substrat (4) avec une longueur d'extrémité (8) qui fait saillie hors de celui-ci, ladite longueur d'extrémité étant formée avec un filet de vis ; un écrou (12) avec un filet de vis interne complémentaire de celui de la longueur d'extrémité du tirant d'ancrage et un manchon (10) pour montage sur la longueur d'extrémité (8) du tirant d'ancrage, caractérisé en ce que ledit écrou a une section terminale conique (16) ; le manchon (10) ayant un profil interne complémentaire de la section terminale conique (16) de l'écrou (12) et étant conçu pour recevoir celle-ci, de façon telle que le serrage de l'écrou sur la longueur d'extrémité du tirant d'ancrage contre le manchon et le substrat avec la section conique de l'écrou en mise en prise complémentaire avec le profilé interne du manchon engendre des forces radiales entre le manchon (10) et l'écrou (12), forçant la section conique (16) de l'écrou en une mise en prise avec serrage avec la longueur d'extrémité (8) du tirant d'ancrage.

2. Un ensemble selon la Revendication 1, englobant une plaque d'écartement (14) pour l'adaptation au-dessus de la longueur d'extrémité (8) et pour la mise en prise de la surface d'un substrat autour du tirant d'ancrage ; de façon telle que ledit serrage de l'écrou (12) maintient la plaque d'écartement en place contre le substrat.

3. Un ensemble selon la Revendication 2, dans lequel les profilés extérieurs du manchon (10) et de la surface de la plaque d'écartement (14) sont mutuellement complémentaires dans leurs régions qui sont adaptées pour entrer en contact.

4. Un ensemble selon la Revendication 3, dans lequel le profilé extérieur du manchon (10) dans ladite région respective est sphérique.

5. Un ensemble selon la Revendication 3, dans lequel le profilé extérieur du manchon (10) dans ladite région respective est toroïdal.

6. Un ensemble selon la Revendication 1, dans lequel le manchon (10) est formé avec une face de butée pour la mise en prise avec la surface du substrat autour du tirant d'ancrage.

7. Un ensemble selon l'une quelconque des revendications précédentes, dans lequel la longueur axiale du filet de vis intérieur sur l'écrou (12) est inférieure à la longueur axiale de l'écrou (12).

8. Un ensemble selon la Revendication 7, dans lequel le filet de vis intérieur sur l'écrou (12) ne s'étend que dans une partie de la section terminale conique (16).

9. Un ensemble selon la Revendication 7 ou la Revendication 8, dans lequel la partie de la surface interne de l'écrou (12) qui est exempte de filet de vis est garnie d'un matériau de frottement.

10. Un ensemble selon l'une quelconque des revendications précédentes, dans lequel une au moins des surfaces à mise en prise complémentaires du manchon (10) et de l'écrou (12) est garnie d'un matériau de frottement.

11. Un ensemble selon l'une quelconque des revendications précédentes, dans lequel la partie conique sur le profilé intérieur du manchon (10) est inférieure à celle de la section terminale de l'écrou (12).
